(19) Europäisches Patentamt
European Patent Office
Office européen des brevets

(11) **EP 2 492 804 B1**

(12) **FASCICULE DE BREVET EUROPEEN**

(45) Date de publication et mention
de la délivrance du brevet:
**04.09.2013 Bulletin 2013/36**

(51) Int Cl.:
**G06F 7/523** (2006.01)    **G06F 7/72** (2006.01)

(21) Numéro de dépôt: **12154466.2**

(22) Date de dépôt: **08.02.2012**

(54) **Procédé de cryptographie comprenant une opération d'exponentiation**

Kryptografieverfahren, das eine Exponentierungsoperation umfasst

Encryption method comprising an exponentiation operation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2011 FR 1151569**

(43) Date de publication de la demande:
**29.08.2012 Bulletin 2012/35**

(73) Titulaire: **Inside Secure**
**13856 Aix-en-Provence Cedex 3 (FR)**

(72) Inventeurs:
• **Feix, Benoît**
**13400 Aubagne (FR)**
• **Gagnerot, Georges**
**13011 Marseille (FR)**
• **Rousselet, Mylène**
**13100 Aix-en-Provence (FR)**
• **Verneuil, Vincent**
**13090 Aix-en-Provence (FR)**
• **Clavier, Christophe**
**87800 Rilhac Lastours (FR)**

(74) Mandataire: **Marchand, André et al**
**OMNIPAT**
**24 Place des Martyrs de la Résistance**
**13100 Aix-en-Provence (FR)**

(56) Documents cités:
**DE-A1- 3 545 580     US-A1- 2009 092 245**

• **CHEN T C: "A binary multiplication scheme based on squaring", IEEE TRANSACTIONS ON COMPUTERS, IEEE SERVICE CENTER, LOS ALAMITOS, CA, US, vol. C-20, no. 6, 1 juin 1971 (1971-06-01) , pages 678-680, XP009106180, ISSN: 0018-9340, DOI: 10.1109/T-C.1971.223325**
• **AMBROSE J A ET AL: "MUTE-AES: A multiprocessor architecture to prevent power analysis based side channel attack of the AES algorithm", COMPUTER-AIDED DESIGN, 2008. ICCAD 2008. IEEE/ACM INTERNATIONAL CONFERENCE ON, IEEE, PISCATAWAY, NJ, USA, 10 novembre 2008 (2008-11-10), pages 678-684, XP031398717, ISBN: 978-1-4244-2819-9**
• **STANISLAW J PIESTRAK: "Design of Squarers Modulo <maths><tex>$A$</tex></maths>With Low-Level Pipelining", IEEE TRANSACTIONS ON CIRCUITS AND SYSTEMS II: ANALOG AND DIGITALSIGNAL PROCESSING/ISSN 1057-7130>VN 8090B, INSTITUTE OF ELECTRICAL AND ELECTRONICS ENGINEERS INC, 345 EAST 47 STREET, NEW YORK, N.Y. 10017, USA, vol. 49, no. 1, 1 janvier 2002 (2002-01-01), XP011071551, ISSN: 1057-7130**
• **TADEUSZ TOMCZAK ED - ANONYMOUS: "Residue Arithmetic in FPGA Matrices", DEPENDABILITY OF COMPUTER SYSTEMS, 2006. DEPCOS-RELCOMEX '06. INT ERNATIONAL CONFERENCE ON, IEEE, PI, 1 mai 2006 (2006-05-01), pages 297-305, XP031025008, ISBN: 978-0-7695-2565-5**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 492 804 B1

**Description**

La présente invention concerne un procédé de calcul itératif du résultat de l'exponentiation d'une donnée m par un exposant d, mis en oeuvre dans un dispositif électronique.

Divers procédés de cryptographie connus reposent sur l'opération d'exponentiation modulaire, qui a pour expression mathématique :

$$m^d \ modulo(n),$$

m étant une donnée d'entrée, d un exposant et n un module. La fonction d'exponentiation modulaire consiste à calculer le reste de la division par n de m à la puissance d.

Une telle fonction est utilisée par divers algorithmes de cryptographie tels que l'algorithme RSA ("Rivest, Shamir et Adleman"), l'algorithme DSA ("Digital Signature Algorithm"), El Gamal, etc. La donnée m est généralement un message à déchiffrer ou à signer et l'exposant d est une clé privée.

Il est connu d'exécuter un calcul d'exponentiation modulaire au moyen de l'algorithme "Square & Multiply" ("élever au carré et multiplier") A1 ou A1' ci-après tel que figurant en Annexe.

L'algorithme A1 est dit "de gauche à droite" car les premières étapes de la boucle de calcul commencent par les bits de poids fort de l'exposant, pour aller vers les bits de poids faible. L'algorithme A1' est dit "de droite à gauche" car les premières étapes de la boucle de calcul commencent par les bits de poids faible de l'exposant, pour aller vers les bits de poids fort.

Ces algorithmes comprennent des multiplications de deux variables de grande taille identiques et des multiplications de deux variables de grande taille différentes. Il est généralement fait appel à des fonctions différentes pour exécuter chacune de ces opérations, la multiplication de deux variables de grande taille identiques étant exécutée au moyen d'une fonction d'élévation au carré ou fonction "CARRE", tandis que la multiplication de deux variables de grande taille différentes est exécutée au moyen d'une fonction de multiplication ou fonction "MULT". Cette distinction est due au fait qu'il est possible de calculer plus rapidement xxy lorsque x=y que dans le cas contraire, au moyen de la fonction CARRE. Le ratio entre le temps d'exécution de la fonction CARRE et le temps d'exécution de la fonction MULT est généralement de l'ordre de 0,8 mais peut varier entre 0,5 et 1 suivant la taille des nombres considérés, la façon dont la multiplication est exécutée, etc.

Dans un dispositif électronique de type carte à puce, le calcul cryptographique est généralement exécuté par un processeur spécifique, tel un coprocesseur arithmétique ou un crypto-processeur. Le calcul de "$m^d$ modulo n" et plus particulièrement l'exécution des multiplications occupe la majeure partie du temps de calcul du processeur relativement au temps total de calcul d'une signature ou d'une opération de chiffrement ou de déchiffrement. Le fait d'utiliser alternativement la fonction CARRE ou la fonction MULT en fonction du type de calcul à effectuer permet donc d'optimiser le temps de calcul global de chiffrement, de signature ou de déchiffrement.

Toutefois, l'utilisation de deux fonctions différentes CARRE et MULT conduit à une fuite d'information détectable par analyse SPA ("Single Power Analysis"), c'est-à-dire par analyse de la consommation électrique de la carte. La fonction CARRE ayant un temps d'exécution plus court que la fonction MULT, il est possible de différencier ces deux opérations en observant la courbe de consommation électrique du composant. On entend par "consommation électrique" toute grandeur physique observable trahissant le fonctionnement du composant électronique exécutant l'opération, notamment le courant électrique consommé ou le rayonnement électromagnétique du composant.

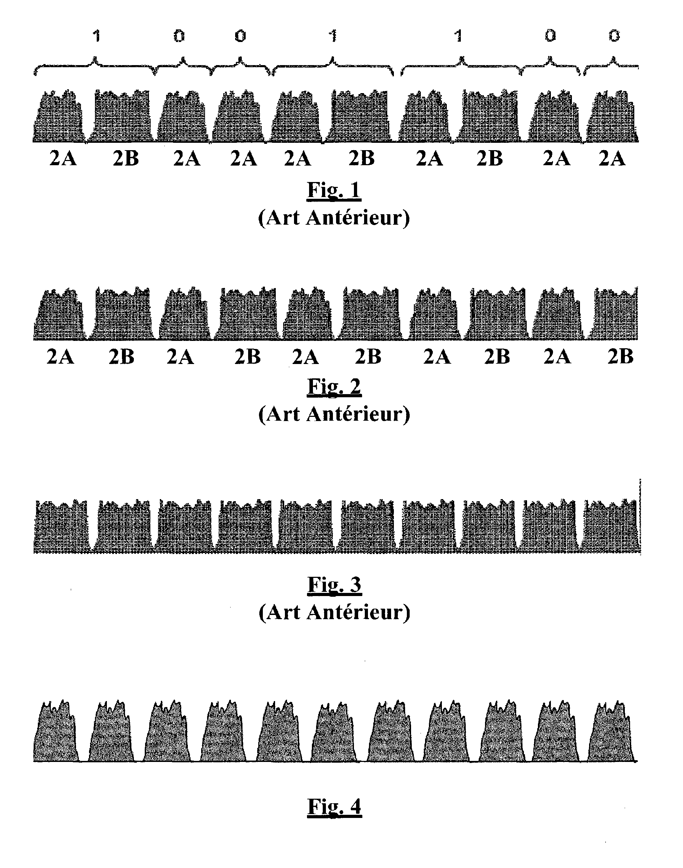

La figure 1 représente une courbe de consommation électrique d'un composant exécutant l'algorithme A1. On distingue clairement le profil de consommation de la fonction CARRE et celui de la fonction MULT. Une opération CARRE suivie d'une opération MULT (étape 2A suivie d'une étape 2B) révèle que le bit de l'exposant d est égal à 1 puisque le branchement conditionnel vers l'étape 2B nécessite que la condition $d_s=1$ soit réalisée. Inversement, une opération CARRE suivie d'une autre opération CARRE (étape 2A suivie d'une autre étape 2A) révèle que le bit de l'exposant est égal à 0. Les bits de l'exposant d peuvent ainsi être découverts les uns après les autres par une simple observation de la courbe de consommation électrique.

Pour pallier cet inconvénient, les étapes 2A et 2B (ou 2A' et 2B') pourraient être effectuées au moyen de la fonction MULT uniquement, sans utiliser la fonction CARRE. Toutefois, une analyse plus fine de la consommation électrique permettrait de distinguer l'étape 2A de l'étape 2B (ou de distinguer l'étape 2A' de l'étape 2B') car l'algorithme A1 ou A1' n'est pas régulier. En effet, dans ce cas, le temps s'écoulant entre deux multiplications successives n'est pas le même lorsque les deux multiplications correspondent à l'exécution successive de deux étapes 2A (bit de l'exposant égal à 0) ou correspondent à l'exécution d'une étape 2A suivie d'une étape 2B (bit de l'exposant égal à 1). Un attaquant pourrait ainsi "zoomer" sur la partie de la courbe de consommation s'étendant entre les multiplications et observerait une dissymétrie temporelle révélatrice du branchement conditionnel et donc de la valeur du bit de l'exposant.

L'algorithme A2 figurant en Annexe est une version de l'algorithme A1 qui permet de pallier cet inconvénient. L'algorithme est appelé "Square & Multiply Always" ("toujours élever au carré et multiplier") car une multiplication factice utilisant un paramètre factice b est insérée après une élévation au carré lorsque le bit de l'exposant d est égal à 0, grâce à un double branchement conditionnel "si" et "sinon".

La figure 2 montre la consommation électrique résultant de l'exécution de l'algorithme A2. On constate une régularité des pics de consommation correspondant à une succession d'étapes 2A et 2B, qui protège l'algorithme contre une attaque SPA. On suppose donc que le double branchement conditionnel "si" et "sinon" ne produit pas de fuite détectable par analyse SPA, car on ne peut pas distinguer si la condition est vraie ou fausse, puisqu'une multiplication est toujours exécutée. L'algorithme A2 est dit "régulier" puisque l'attaquant voit une succession d'étapes identiques. Il ne répond toutefois pas au principe d'atomicité.

Le principe d'atomicité a été introduit par B. Chevallier-Mames, M. Ciet et M. Joye, dans un article intitulé "Low-Cost Solutions for Preventing Simple Side-Channel Analysis: Side-Channel Atomicity ", paru dans IEEE Transactions on Computers, Volume 53, Issue 6 (June 2004), Pages: 760 - 768, 2004. Il est également décrit dans la demande internationale WO 03 083 645 ou le brevet US 7 742 595. L'application du principe d'atomicité conduit à transformer une boucle non régulière, par exemple la boucle constituée par les étapes 2A et 2B de l'algorithme A1 ou celle constituée par les étapes 2A' et 2B' de l'algorithme A1', en une suite régulière de multiplications, sans utiliser de multiplication factice, pour un gain de temps dans l'exécution de l'algorithme.

A titre d'exemple, l'algorithme d'exponentiation A3 figurant en Annexe, appelé "Multiply Always", est la version atomique de l'algorithme A1 "Square & Multiply". L'algorithme est parfaitement régulier en ce qu'il ne comporte que des multiplications et en ce que chaque itération de la boucle principale ne comprend qu'une seule multiplication..

La figure 3 représente la courbe de consommation électrique de l'algorithme A3 et montre la régularité des pics de consommation électrique.

Dans cet algorithme, certaines multiplications sont des multiplications de variables différentes et d'autres sont des multiplications de variables identiques. Or, dans l'article "Distinguishing Multiplications from Squaring Operations", Selected Areas in Cryptography, volume 5381 of Lecture Notes in Computer Science, pages 346-360, Springer, 2008, les auteurs F. Amiel, B. Feix, M. Tunstall, C. Whelan, et W. Marnane divulguent un procédé d'analyse à canal caché qui exploite une différence intrinsèque entre la multiplication de deux variables différentes et la multiplication de deux variables identiques (équivalente à une élévation au carré), le résultat de la seconde ayant en moyenne un poids de Hamming inférieur au résultat de la première.

L'algorithme A3 "Multiply Always" est donc exposé à ce type d'attaque, car il contient des multiplications de termes différents et des multiplications de termes égaux.

L'algorithme A2 "Square & Multiply Always" n'est pas sensible à ce type d'attaque car les multiplications exécutées à l'étape 2B sont toutes des multiplications de variables différentes et l'étape 2A est exécutée avec la fonction CARRE. Il présente toutefois l'inconvénient d'un temps d'exécution non optimisé en raison des multiplications factices qu'il comporte. De plus, il existe une classe d'attaques dite "safe errors" qui permettent de détecter les opérations factices qu'un algorithme comporte. Ces attaques consistent à injecter une faute dans un calcul cryptographique à un instant particulier, et à observer si le résultat du calcul est juste ou faux. Ce type d'attaque appliqué à l'algorithme A2 permet de savoir si une multiplication est faite après un "si" ou après un "sinon". En effet, dans le second cas, le résultat de la multiplication factice n'est pas utilisé pour le calcul du résultat final. Une injection d'erreur dans une boucle dans laquelle le branchement conditionnel "sinon" est actif n'affecte donc pas le résultat et permet de savoir que le branchement conditionnel "sinon" a été retenu et non le branchement "si".

Il pourrait donc être souhaité de prévoir un procédé d'exécution d'un calcul d'exponentiation qui soit protégé contre les attaques à canal caché qui viennent d'être mentionnées, et qui puisse par ailleurs être optimisé en termes de vitesse d'exécution.

Des modes de réalisation de l'invention concernent un procédé de calcul itératif protégé contre des attaques à canal caché, pour le calcul du résultat de l'exponentiation d'une donnée m par un exposant d, mis en oeuvre dans un dispositif électronique et comprenant des multiplications de variables de grande taille exécutées au moyen d'au moins un bloc de calcul du dispositif électronique, le procédé ne comprenant que des multiplications de variables de grande taille identiques, toute multiplication de variables de grande taille différentes x, y étant décomposée en une combinaison de multiplications de variables de grande taille identiques.

Selon un mode de réalisation, une multiplication de deux variables de grande taille différentes x, y est décomposée en une combinaison de multiplications de variables de grande taille identiques au moyen de l'une des formules suivantes ou d'une formule équivalente dérivée desdites formules :

$$x \times y = [(x+y) \times (x+y) - x \times x - y \times y]/2$$

$$x \times y = (x+y) \times (x+y)/2 - x \times x/2 - y \times y/2$$

$$x×y = (x+y)×(x+y)/2 - [x×x + y×y]/2$$

$$x×y = [(x+y)×(x+y) - x×x]/2 - y×y/2$$

$$x×y = [(x+y)×(x+y) - y×y]/2 - x×x/2$$

$$x×y = [(x+y)/2]×[(x+y)/2] − [(x-y)/2]×[(x-y)/2]$$

$$x×y = [(x+y)×(x+y)]/4 - [(x-y)×(x-y)]/4$$

$$x×y = [(x+y)×(x+y) - (x-y)×(x-y)]/4$$

Selon un mode de réalisation, toutes les multiplications de variables de grande taille identiques sont exécutées au moyen d'au moins un bloc de calcul de la fonction d'élévation au carré.

Selon un mode de réalisation, le procédé ne comprend aucune multiplication factice.

Selon un mode de réalisation, le procédé comprend l'exécution simultanée de deux multiplications de variables de grande taille au moyen de deux blocs de calcul de la fonction de multiplication ou de la fonction d'élévation au carré.

Selon un mode de réalisation, le procédé comprend l'exécution simultanée d'une multiplication factice d'une variable de grande taille et d'une multiplication non factice d'une variable de grande taille, de telle sorte qu'un bloc de calcul ne puisse pas être au repos tandis que l'autre est actif.

Des modes de réalisation de l'invention comprennent également un dispositif protégé contre des attaques à canal caché et configuré pour calculer le résultat de l'exponentiation d'une donnée m par un exposant d, comprenant au moins un bloc de calcul pour exécuter des multiplications de variables de grande taille, le dispositif étant configuré pour n'exécuter que des multiplications de variables de grande taille identiques en décomposant toute multiplication de variables de grande taille différentes x, y en une combinaison de multiplications de variables de grande taille identiques.

Selon un mode de réalisation, le dispositif est configuré pour décomposer une multiplication de deux variables de grande taille différentes x, y en une combinaison de multiplications de variables de grande taille identiques au moyen de l'une des formules suivantes ou d'une formule équivalente dérivée desdites formules :

$$x×y = [(x+y)×(x+y) − x×x − y×y]/2$$

$$x×y = (x+y)×(x+y)/2 - x×x/2 - y×y/2$$

$$x×y = (x+y)×(x+y)/2 - [x×x + y×y]/2$$

$$x×y = [(x+y)×(x+y) - x×x]/2 - y×y/2$$

$$x×y = [(x+y)×(x+y) - y×y]/2 - x×x/2$$

$$x×y = [(x+y)/2]×[(x+y)/2] − [(x-y)/2]×[(x-y)/2]$$

$$x×y = [(x+y)×(x+y)]/4 - [(x-y)×(x-y)]/4$$

$$x \times y = [(x+y) \times (x+y) - (x-y) \times (x-y)]/4$$

Selon un mode de réalisation, le dispositif est configuré pour exécuter toutes les multiplications de variables de grande taille identiques au moyen d'au moins un bloc de calcul de la fonction d'élévation au carré.

Selon un mode de réalisation, le dispositif est configuré pour n'exécuter aucune multiplication factice.

Selon un mode de réalisation, le dispositif comprenant deux blocs de calcul de la fonction de multiplication ou de la fonction d'élévation au carré, et est configuré pour l'exécution simultanée de deux multiplications de variables de grande taille au moyen des deux blocs de calcul.

Selon un mode de réalisation, le dispositif est configuré pour exécuter simultanément une multiplication factice d'une variable de grande taille et une multiplication non factice d'une variable de grande taille, de telle sorte qu'un bloc de calcul ne puisse pas être au repos tandis que l'autre est actif.

Des modes de réalisation de l'invention concernent également un circuit intégré sur microplaquette de semi-conducteur, comprenant un circuit électronique selon l'invention.

Des modes de réalisation de l'invention concernent également un objet portatif, comprenant un circuit électronique selon l'invention.

Des modes de réalisation de l'invention seront décrits dans ce qui suit en relation avec les figures jointes, parmi lesquelles :

- la figure 1 précédemment décrite représente la courbe de consommation électrique d'un composant exécutant un premier algorithme d'exponentiation classique,
- la figure 2 précédemment décrite représente la courbe de consommation électrique d'un composant exécutant un second algorithme d'exponentiation classique,
- la figure 3 précédemment décrite représente la courbe de consommation électrique d'un composant exécutant un troisième algorithme d'exponentiation classique,
- la figure 4 représente la courbe de consommation électrique d'un composant exécutant un algorithme selon l'invention,
- les figures 5A, 5B représentent deux variantes d'un dispositif électronique mettant en oeuvre un premier algorithme d'exponentiation selon l'invention, et
- les figures 6A, 6B représentent deux variantes d'un dispositif électronique mettant en oeuvre un second algorithme d'exponentiation selon l'invention.

L'invention concerne un procédé de calcul cryptographique ne comportant que des multiplications de variables de grande taille identiques. Il se fonde sur la transformation d'une multiplication de deux variables de grande taille différentes x, y en une combinaison de multiplications de variables de grande taille identiques, en utilisant l'une des deux formules suivantes :

$$(i) \qquad x \times y = [(x+y) \times (x+y) - x \times x - y \times y]/2$$

$$(ii) \qquad x \times y = [(x+y)/2] \times [(x+y)/2] - [(x-y)/2] \times [(x-y)/2]$$

La mise en oeuvre de la formule (i) inclut le fait de remplacer un appel à la fonction MULT(a,b) par trois appels à la fonction MULT(a,b), et d'exécuter une addition, deux soustractions et une division par 2. La mise en oeuvre de la formule (ii) inclut le fait de à remplacer un appel à la fonction MULT(a,b) par deux appels à la fonction MULT, et d'exécuter une addition, deux soustractions et deux divisions par 2. Ces multiplications peuvent être modulaires ou non, selon l'application considérée. Le procédé peut être un calcul d'exponentiation RSA, une multiplication scalaire dans un procédé de cryptographie ECC (cryptographie à courbe elliptique), etc.

Dans une variante de réalisation, les appels à la fonction MULT(a,b) sont remplacés par des appels à la fonction CARRE(a) puisque ces appels se font toujours avec a=b. La fonction CARRE étant généralement d'exécution plus rapide, cela permet d'optimiser le temps global d'exécution du procédé.

Le procédé est ainsi protégé contre l'attaque décrite plus haut, consistant à distinguer une multiplication de deux variables différentes d'une multiplication de deux variables identiques.

L'algorithme A4 figurant en Annexe est un exemple de réalisation d'un algorithme d'exponentiation selon l'invention, de gauche à droite, en version atomique, utilisant la formule (i).

Dans l'algorithme A4 et dans les algorithmes décrits plus loin :

- "a ⊕ b" désigne le OU Exclusif bit à bit des variables a et b ;
- "a >> b" désigne le décalage à droite de b bits de la variable a;
- a*b désigne la multiplication de variables de petite taille, qui est exécutée sans faire appel à la fonction MULT ou à la fonction CARRE, c'est-à-dire dans faire appel à un bloc de multiplication ou d'élévation au carré.

On voit que l'étape 3A ne comprend que des multiplications de termes identiques. Egalement, l'algorithme ne comporte aucune multiplication factice. De plus, dans ce mode de réalisation, les variables u, s, t et les étapes 3B à 3E sont avantageusement prévues pour régulariser les opérations qui sont exécutées entre les multiplications à chaque boucle de calcul, pour ne pas faire apparaître, entre l'exécution de deux multiplications, une différence temporelle qui serait fonction de la valeur du bit de l'exposant. En effet, bien que le temps d'exécution de divisions par deux, des additions et des soustractions soit négligeable, un attaquant pourrait "zoomer" sur la courbe de consommation électrique correspondant à ces opérations afin de détecter des indices révélant la valeur du bit de la clé en cours de traitement.

Dans l'algorithme A4, la formule (i) est mise en oeuvre de la manière suivante : on observe que le deuxième opérande de la multiplication de l'étape 2B dans l'algorithme A1 est constant et vaut m. Cette observation permet de remplacer cette multiplication de termes différents par seulement deux multiplications de termes identiques et non trois comme le nécessite la formule (i) dans le cas général. En effet considérons la formule (i') suivante :

$$(i') \qquad x \times m = [(x+m) \times (x+m) - x \times x]/2 - (m \times m)/2$$

Cette formule permet de calculer (mxm) une seule fois pour toute l'exponentiation ce qui rend son "coût" négligeable en termes de temps de calcul. Dans l'algorithme A4, m est enregistré dans $R_1$ et (mxm)/2 mod n est enregistré dans $R_3$.

L'algorithme ayant été développé à l'aide d'outils de développement et de simulation spécifiques, son fonctionnement n'est aisé à appréhender à la seule lecture de celui-ci. Le fonctionnement de l'algorithme peut toutefois être compris en se référant à l'algorithme classique A1 comme point de repère, et en considérant l'exécution des étapes 3A à 3E dans les conditions initiales définies à l'étape 2. Deux cas peuvent se produire :

1) Le bit di de l'exposant vaut 0 :

- l'algorithme calcule $R_0 = R_0 x R_0$ (ce qui correspond à l'étape 2A de l'algorithme A1).

2) Le bit di vaut 1, l'algorithme fait trois tours de boucle :

- $R_0 = R_0 x R_0$ (ce qui correspond à l'étape 2A de l'algorithme A1)
- $R_2 = (R_0+m) \times (R_0+m)/2 - mxm/2$, puis
- $R_0 = R_0 x R_0/2$ et $R_0 = R_2 - R_0$ (ce qui correspond à l'étape 2B de l'algorithme A1 mise en oeuvre avec la formule (i')).

La figure 4 représente le profil de consommation électrique d'un composant exécutant l'algorithme A4. La courbe de consommation électrique ne présente qu'une succession de pics correspondant à des appels à la fonction MULT (ou CARRE). Une telle courbe de consommation ne permet pas de déduire la valeur des bits de l'exposant secret et est donc protégée d'une attaque SPA. D'autre part, l'attaque consistant à distinguer une multiplication de deux variables différentes d'une multiplication de deux variables identiques n'est pas applicable puisque le procédé ne comporte que des multiplications de termes égaux.

L'algorithme A5 figurant en Annexe est un autre exemple d'algorithme d'exponentiation selon l'invention, de gauche à droite, en version atomique, utilisant ici la formule (ii).

L'algorithme A5 présente un profil de consommation électrique identique à l'algorithme 4 et offre donc le même degré de protection contre les attaques précitées.

Le fonctionnement de l'algorithme A5 peut être compris en se référant à l'algorithme classique A1 décrit plus haut, et en considérant l'exécution des étapes 3A à 3E dans les conditions initiales définies à l'étape 2. Deux cas peuvent se produire :

1) Le bit $d_i$ de l'exposant vaut 0 :

- l'algorithme calcule $R_0=R_0xR_0$ (ce qui correspond à l'étape 2A de l'algorithme A1).

2) Le bit $d_i$ vaut 1, l'algorithme effectue trois itérations de la boucle "tant que" :

- $R_0 = R_0xR_0$ (ce qui correspond à l'étape 2A de l'algorithme A1)
- $R_2 = ((R_0+m) /2)\times((R_0+m) /2)$
- $R_0 = ((R_0-m) /2)\times((R_0-m) /2)$ et $R_0 = R_2-R_0$ (ce qui correspond à l'étape 2B de l'algorithme A1 mise en oeuvre avec la formule (ii)).

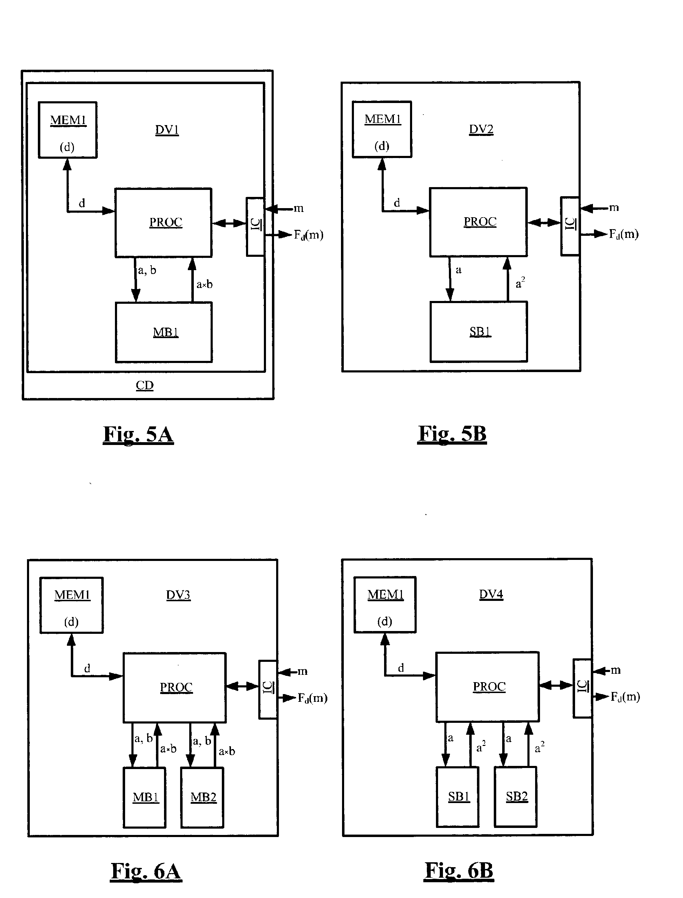

La figure 5A représente sous forme de schéma bloc un dispositif électronique DV1 configuré pour exécuter un calcul cryptographique incluant l'algorithme A4 ou A5. Le dispositif DV1 peut être un circuit intégré sur microplaquette de semi-conducteur agencé sur un support portatif CD tel une carte plastique, l'ensemble formant une carte à puce.
Le dispositif DV1 comprend un processeur PROC, un bloc de calcul MB1 configuré pour exécuter la fonction MULT(a,b) de variables de grande taille a, b, une mémoire MEM1 et un circuit d'interface de communication IC. Le circuit d'interface IC peut être du type à contact ou sans contact, par exemple un circuit d'interface RF ou UHF fonctionnant par couplage inductif ou par couplage électrique. Le bloc de calcul MB1 peut être un coprocesseur équipé d'une unité centrale programmable, un coprocesseur entièrement hardware de type machine d'état, ou un sous-programme de multiplication exécuté par le processeur.
De façon en soi classique, une variable est dite "de grande taille" lorsque sa taille (en nombre de bits) est supérieure à celle du registre de calcul du processeur PROC. Ce dernier effectue lui-même, sans faire appel au bloc de calcul MB1, des multiplications de variables de petite taille, soit de taille inférieure ou égale à celle de son registre de calcul, et fait appel au bloc de calcul MB1 pour les multiplications de variables de grande taille. Par exemple, si la taille du registre de calcul est 32 bits, une variable de grande taille est une variable de plus de 32 bits.
La mémoire MEM1 est couplée au processeur PROC et permet au dispositif de mémoriser une clé secrète d. Le processeur PROC reçoit, par l'intermédiaire du circuit d'interface IC, un message à chiffrer ou à signer, et renvoie un message chiffré ou une signature du type $F_d(m)$, F étant une fonction de cryptographie basée sur la clé d comprenant un calcul d'exponentiation de type $m^d$ modulo(n) exécuté au moyen de l'algorithme A5 ou A6. Pendant le calcul d'exponentiation, le processeur PROC fait appel au bloc de calcul MB1 en lui fournissant des variables a, b qui sont toujours égales, et le bloc de calcul MB1 retourne $a\times b$.
La figure 5B représente sous forme de schéma bloc un dispositif électronique DV2 configuré pour exécuter un calcul cryptographique incluant l'algorithme A4 ou A5. Le dispositif DV2 ne diffère du dispositif DV1 qu'en ce que le bloc de calcul MB1 est remplacé par un bloc de calcul SB1 configuré pour exécuter la fonction CARRE. Comme précédemment, le bloc de calcul SB1 peut être un coprocesseur équipé d'une unité centrale programmable, un coprocesseur entièrement hardware ou un sous-programme d'élévation au carré exécuté par le processeur.
Un algorithme d'exponentiation selon l'invention peut également être dérivé de l'algorithme A1' décrit plus haut, qui constitue la variante "de droite à gauche" de l'algorithme A1. Bien que dans ce mode de réalisation aucun opérande n'est constant lors de la multiplication, la formule (i) et la formule (ii) restent équivalentes en termes de complexité. En effet, la formule (i) nécessite le calcul de trois multiplications (a+b)x(a+b), $a\times a$ et $b\times b$ au lieu de deux multiplications, mais le calcul de $b\times b$ est nécessaire pour l'étape 2B. Ainsi, ces trois opérations permettent de réaliser les étapes 2A et 2B. Il en est de même lors de l'utilisation de la formule (ii) qui nécessite trois multiplications : deux pour exécuter l'étape 2A et une pour exécuter l'étape 2B.
On s'intéressera toutefois dans ce qui suit, à titre non limitatif, à l'utilisation de la formule (ii) qui est plus flexible par nature en ce qu'elle nécessite de manière générale deux multiplications au lieu de trois.
L'algorithme A6 figurant en Annexe est un autre exemple de réalisation d'un calcul d'exponentiation selon l'invention, de droite à gauche, en version atomique, mettant en oeuvre la formule (ii).
L'algorithme A6 présente un profil de consommation identique à l'algorithme A4 ou A5 et offre donc le même degré de protection contre les attaques susmentionnées.
Le fonctionnement de l'algorithme peut être compris en se référant à l'algorithme classique A1 décrit plus haut, et en considérant l'exécution des étapes 3A à 3E dans les conditions initiales définies à l'étape 2. Deux cas peuvent se produire :

1) Le bit $d_i$ de l'exposant vaut 0 :

- l'algorithme calcule $R_0=R_0xR_0$ (ce qui correspond à l'étape 2B de l'algorithme A1').

2) Le bit di vaut 1, l'algorithme effectue trois itérations de la boucle "tant que":

- $R_2 = ((R_0+R1)/2)\times((R_0+R1)/2)$

- $R_1 = ((R_0-R1)/2) \times ((R_0-R1)/2)$ et $R_1 = R_2-R_1$ (ce qui correspond à l'étape 2A de l'algorithme A1' mise en oeuvre avec la formule (ii)).
- $R_0 = R_0 \times R_0$ (ce qui correspond à l'étape 2B de l'algorithme A1').

Un algorithme d'exponentiation selon l'invention peut également être conçu de manière à présenter une architecture parallèle faisant appel à deux blocs de calcul distincts et permettant d'effectuer simultanément deux multiplications différentes (ou deux élévations au carré). En effet, lorsqu'une multiplication est remplacée par deux multiplications (formule (ii) ou formule (i') dérivée de (i)) ou trois multiplications (formule (i)), ces multiplications sont indépendantes les unes des autres et peuvent donc être exécutées en même temps.

Dans ce cas, des précautions particulières peuvent être prévues pour éviter de créer une fuite d'information détectable par le biais d'une analyse SPA. En particulier, il peut être souhaité qu'un attaquant ne puisse pas distinguer si une seule ou deux multiplications sont exécutées en parallèle. A cet effet des opérations factices peuvent être prévues.

Il sera noté que la prévision d'opérations factices dans une architecture d'algorithme parallèle n'affecte pas le temps d'exécution de l'algorithme lorsque les opérations factices sont exécutées en même temps que des opérations nécessaires au calcul du résultat. En effet, si l'on vise par exemple la parfaite parallélisation, au moyen de deux blocs de calcul, d'un algorithme comprenant une séquence de trois opérations nécessaires 01, 02, 03, une telle parallélisation nécessite la prévision d'une opération factice 04. Dans ce cas, l'algorithme comprend l'exécution en parallèle, notée 01//02, des opérations 01, 02, suivie de l'exécution en parallèle, notée 03//04, des opérations 03, 04. Une telle exécution parallélisée est plus rapide que l'exécution séquentielle de 01, 02, et 03 et est aussi rapide que l'exécution de 01//02 suivie de l'exécution de l'opération 03 isolément. On considère donc ici que le principe d'atomicité est respecté lorsque des opérations factices sont toujours exécutées en même temps qu'une opération non factice.

Par ailleurs, les algorithmes de droite à gauche sont plus souples en termes de parallélisation. En effet, on peut remarquer que les étapes 2B' de l'algorithme A1' peuvent être enchaînées sans attendre le résultat des étapes 2A', si les résultats intermédiaires sont conservés en mémoire, tandis que les étapes 2A' et 2B' de l'algorithme A1 doivent être exécutées séquentiellement.

L'algorithme A7 figurant en Annexe illustre un exemple de réalisation d'un calcul d'exponentiation selon l'invention, de droite à gauche, en version atomique, parallélisé, mettant en oeuvre la formule (ii).

La notation "//" désigne deux étapes de calcul parallélisées. Cette version atomique de l'algorithme contient des opérations factices destinées à masquer (régulariser) les manipulations de variables entre les multiplications. Ces opérations factices sont enregistrées dans le registre x. Seule l'opération x=(a-b) mod n n'est pas factice. De même, des branchements conditionnels factices sont utilisés pour régulariser le nombre de branchements empruntés par boucle.

L'algorithme A8 figurant en Annexe est une variante équivalente de l'algorithme A7.

L'algorithme A8 utilise deux matrices M1 et M2 enregistrées en mémoire, contenant des constantes.

Matrice M1 :

$$1\ 1\ 5\ 6\ 5\ 5\ 5\ 0\ 1$$
$$0\ 6\ 4\ 3\ 0\ 1\ 3\ 1\ 1$$
$$2\ 5\ 3\ 1\ 5\ 5\ 5\ 0\ 0$$
$$2\ 5\ 0\ 6\ 0\ 1\ 5\ 0\ 1$$

Matrice M2 :

$$1\ 1\ 0$$
$$5\ 2\ 2$$

Les indices des lignes et colonnes de M1, respectivement M2, sont notés de 0 à 3, respectivement de 0 à 1, pour les lignes, et de 0 à 8, respectivement de 0 à 2, pour les colonnes.

La figure 6A représente sous forme de schéma bloc un dispositif électronique DV3 configuré pour exécuter un calcul cryptographique incluant l'algorithme A7. Le dispositif DV3 ne diffère du dispositif DV1 qu'en ce qu'il comporte deux blocs de calcul MB1, MB2 de la fonction MULT(a,b) au lieu d'un seul. L'algorithme A7 étant d'une structure parfaitement parallèle, les deux blocs de calcul sont toujours actifs en même temps et il n'existe pas de boucle de calcul dans laquelle un bloc de calcul est actif tandis que l'autre bloc est au repos.

La figure 6B représente sous forme de schéma bloc un dispositif électronique DV4 configuré pour exécuter un calcul cryptographique incluant l'algorithme A7. Le dispositif DV4 ne diffère du dispositif DV3 qu'en ce qu'il comporte deux blocs de calcul SB1, SB2 de la fonction CARRE (a) au lieu de deux blocs de calcul de la fonction MULT(a,b). Les deux blocs de calcul sont toujours actifs en même temps et il n'existe pas de boucle de calcul ou un bloc de calcul est actif tandis que l'autre bloc est au repos.

Comme précédemment les blocs de calcul MB1, MB2, SB1, SB2 peuvent être des coprocesseurs équipés d'une unité centrale programmable, des coprocesseurs entièrement hardware ou des sous-programmes de multiplication ou d'élévation au carré exécutés par le processeur.

Il apparaîtra clairement à l'homme de l'art que la présente invention peut faire l'objet de divers autres modes de réalisation et applications, notamment diverses autres formes d'algorithmes et de dispositifs de cryptographie exécutant de tels algorithmes.

Des modes de réalisation de l'invention peuvent notamment utiliser des formules équivalentes aux formules (i) et (ii) décrites ci-dessus, par exempte ;

Exemple de formules équivalentes à (i) :

$$x×y = (x+y)×(x+y)/2 - x×x/2 - y×y/2$$

$$x×y = (x+y)×(x+y)/2 - [x×x + y×y]/2$$

$$x×y = [(x+y)×(x+y) - x×x]/2 - y×y/2$$

$$x×y = [(x+y)×(x+y) - y×y]/2 - x×x/2$$

Exemple de formules équivalentes à (ii) :

$$x×y = [(x+y)×(x+y)]/4 - [(x-y)×(x-y)]/4$$

$$x×y = [(x+y)×(x+y) - (x-y)×(x-y)]/4, etc.$$

Egalement, dans certains modes de réalisation, la transformation d'une multiplication de deux variables différentes en deux ou trois multiplications de variables identiques au moyen de l'une des formules ci-dessus pourrait consister en une transformation de la multiplication en une pluralité (c'est-à-dire plus que deux ou trois) de multiplications de variables identiques de grande taille mais de taille inférieure à celle des deux variables différentes à multiplier. Dans le cas par exemple où la fonction CARRE est utilisée pour exécuter les multiplications de variables identiques, chaque élévation au carré pourrait être décomposée en une pluralité d'élévation au carré de variables de taille inférieure. En utilisant par exemple les formules de Karatsuba-Ofman, une multiplication de deux variables identiques peut être remplacée par 6 ou 9 élévations au carré de taille égale à la moitie de la taille des variables initiales.

Par ailleurs, et bien que l'on ait exclu expressément dans ce qui précède la prévision, dans un algorithme selon l'invention, de multiplications de variables de grande taille différentes, certains modes de réalisation de l'invention pourraient néanmoins inclure de telles multiplications de variables de grande taille différentes, à condition que ces variables de grande taille soient de type factice, ou non sensibles à des attaques à canal caché. En d'autres termes, la mise en évidence de telles multiplications ne donnerait aucune indication permettant de découvrir les bits de l'exposant. On considère donc, au sens de l'invention, que de telles multiplications n'existent pas puisque l'on s'intéresse exclusivement à la protection des algorithmes contre les attaques à canal caché.

Enfin, bien que les algorithmes décrits dans ce qui précède aient été conçus pour mettre en oeuvre le principe d'atomicité et ainsi offrir la meilleure sécurité contre des attaques SPA tout en présentant un temps de calcul optimisé, des modes de réalisation non atomiques de ces algorithmes mettant en oeuvre la formule (i) ou (ii) ne sont pas exclus du champ de la présente invention.

ANNEXE

Faisant partie intégrante de la description

**Algorithme A1 - Exponentiation "Square & Multiply", de gauche à droite"**
**Entrée :**

> *"m" et" n" des entiers tels que m < n*
> *"d" un exposant de v bits tel que d=$(d_{v-1} d_{v-2}.... d_0)_2$*

**Sortie :** *a=$m^d$* modulo *n*
**Étape 1** : *a*=1
**Étape 2 :** pour *s* allant de v-1 à *0* faire :

> **(Étape 2A)** *a*=(a×a) mod n (CARRE)
> **(Étape 2B)** si $d_s$=1 alors a=(a×m) mod n (MULT)

**Étape 3 :** Retourner résultat a

**Algorithme A1' - Exponentiation "Square & Multiply, de droite à gauche"**
**Entrée :**

> *"m" et" n" des entiers tels que m < n*
> *"d" un exposant de v bits tel que d=$(d_{v-1} d_{v-2}.... d_0)_2$*

Sortie : *a=$m^d$* modulo *n*
**Étape 1 :** *a*=1 ; b=m
**Étape 2 :** pour s allant de 0 à v-1 faire :

> **(Étape 2A')** si $d_s$=1 alors a=(a×b) mod n (MULT)
> **(Étape 2B')** *b*=(b×b) mod n (CARRE)

**Étape 3 :** Retourner résultat a

**Algorithme A2 - Exponentiation "Square & Multiply Always"**
**Entrée :**

> *"m" et" n" des entiers tels que m < n*
> *"d" un exposant de v bits tel que d=$(d_{v-1} d_{v-2}.... d_0)_2$*

Sortie : *a=$m^d$* modulo *n*
**Étape 1 :** *a*=1, *b*=1
**Étape 2 :** pour s allant de v-1 à *0* faire :

> **(Étape 2A)** *a*=(a×a) mod n (CARRE)
> **(Étape 2B)** si $d_{v-s}$=1 alors a=(a×m) mod n (MULT)
>
> sinon *b*=(a×m) mod n (MULT)

**Étape 3 :** Retourner résultat *a*

**Algorithme A3 - "Multiply Always", version atomique, de gauche à droite**
**Entrée :**

> *"m" et" n*" des *entiers tels que m < n*
> *"d" un exposant de v bits tel que d $(d_{v-1} d_{v-2}.... d_0)_2$*

**Sortie :** *$m^d$* modulo *n*
**Étape 1 :** $R_0$ = 1, $R_1$ = m, s = v-1, k = 0
**Étape 2 :** tant que s ≥ *0* **faire :**

> **(Étape 2A)** $R_0$ = $R_0$×$R_k$ mod n

**(Étape 2B)** $k = k \oplus d_s$ ; $s = s - 1 + k$

**Étape 3 :** Retourner résultat $R_0$

<u>Algorithme A4</u>
**Entrée :** *message "m" et module "n" tel que m < n "d" exposant de v bits tel que d = $(d_{u-1} d_{v-2} ... d_0)_2$*

      **Sortie :** $m^d \bmod n$

**Étape 1 :** $R_0 = 1$, $R_1 =$ m $\bmod$ n, $R_2 = 1$, $R_3 = (mxm)/2 \bmod n$
**Étape 2 :** $u = 0$, $s = 2$, $t = 1$, $i = v-1$
**Étape 3** : tant que $i \geq 0$ faire :

      **(Étape 3A)** $R_u = R_u \times R_u \bmod n$
      **(Étape 3B)** $R_s = R_s/2 \bmod n$
      **(Étape 3C)** *si ($u \neq$ s) alors $R_s = R_u + R_t \bmod n$*
      *sinon $R_s = R_2 - R_t \bmod n$*
      **(Étape 3D)** $s = (u + 2) \bmod 4$, $u = d_i{}^*t^*s$, $t = u + (s>>1)$
      **(Étape 3E)** $i = i - ((u \oplus s) >> 1)$
      **Étape 3** : Retourner résultat $R_0$

<u>Alaorithme A5</u>

      **Entrée :** *message "m" et module "n" tel que m < n*
      *"d" exposant de v bits tel que d = $(d_{v-1} d_{v-2} ... d_0)_2$*
      **Sortie :** $m^d \bmod n$
      **Étape 1** : $R_0 = 1$, $R_1 = m \bmod$ n, $R_2 = 1$
      **Étape 2** : $u = 0$, $s = 2$, $w = 2$, $t = 0$, $i = v-1$
      **Étape 3** : tant que $i \geq 0$ faire :

      **(Étape 3A)** $R_u = R_u \times R_u \bmod n$
      **(Étape 3B)** *si (w = 0) alors $R_w = R_t - R_{(t + 1) \bmod 3} \bmod n$*
      *sinon $R_w = R_t + R_{(t + 1) \bmod 3} \bmod n$*
      **(Étape 3C)** $R_s = R_s/2 \bmod n$
      **(Étape 3D)** $t = u$, $u = w^*d_i$, $s = (u+2) \bmod 4$, $w = t \oplus s$
      **(Étape 3E)** $i = i - (w >> 1)$

      **Étape 3 :** Retourner résultat $R_0$

<u>Algorithme A6</u>

      **Entrée :** *message "m" et module "n" tel que m < n*
      *"d" exposant de v bits tel que d = $(d_{v-1} d_{v-2} ... d_0)_2$*
      Sortie : $m^d \bmod n$
      **Étape 1 :** $R_0 = m \bmod$ n, $R_1 = 1$, $R_2 = 1$
      **Étape 2** : $u = 2$, $s = 0$, $w = 0$, $t = 2$, $i = 0$
      **Étape 3** : tant que $i \leq$ l-1 faire :

      **(Étape 3A)** $u = 2 -s_0 -s_1$, $w = 2t \bmod 4$, $t = (2 + 2s_1) \bmod 3$, $s = 2d_i -w -t_0$
      **(Étape 3B)** *si (u = 2) alors $R_u = R_w + R_1 \bmod n$*
      *sinon $R_u = R_w - R_1 \bmod n$*
      **(Étape 3C)** $R_t = R_t/2 \bmod n$
      **(Étape 3D)** $R_s = R_s \times R_s \bmod n$
      **(Étape 3E)** $i = i +1 -s[0] -s[1]$

      **Étape 3 :** Retourner résultat $R_1$

<u>Algorithme A7</u>

**Entrée :**

*"m" et" n" des entiers tels que m < n*

*"d" un exposant de v bits tel que d = (d_{v-1} d_{v-2}.... d_0)_2*

**Sortie :** $m^d$ mod $n$

**Étape 1 :** $a = 1$ ; $b = m$ ; *extra* = 0; $i = 0$ ; $u = 1$; registres temporaires $s_1$, $s_2$, $s_3$

**Étape 2 :** tant que $i \leq v-1$ faire :

x = (a-b) mod n

y = (a+b) mod n

si $d_i = 1$ alors

    **si** *extra* = 0

        **si** u = 1

            $s_1 = x \times x$ mod n // $s_2 = b \times b$ mod n x = (a-$s_1$)/4 mod n x = $s_2$

            x = $s_3$

            x = 1

            u = 0

        **sinon**

            a = $y \times y$ mod n // $s_3 = s_2 \times s_2$ mod n

            a = (a-$s_1$)/4 mod n

            b = $s_2$

            $s_2 = s_3$

            extra = 1

            u = 1

    **sinon**

        **si vrai**

            $s_1 = x \times x$ mod n // a = $y \times y$ mod n

            a = (a-$s_1$)/4 mod n

            b = $s_2$

            x = $s_3$

            extra = 0

            x = 0

    **sinon**

        **si** *extra* = 0

            **si vrai**

                b = $b \times b$ mod n // x = yxy mod n

                x = (a-$s_1$)/4 mod n

                x = $s_2$

                x = $s_3$

                x = 0

                x = 0

            **si** $d_{i+1} = 0$ **et** extra = 1

                b = $s_2$

                extra = 0

i = i + 1

sinon

$x = s_2$
$x = 0$
$x = i + 1$
$i = i + u$

**Étape 3** : Retourner résultat a

**Algorithme A8**
**Entrée :**

*"m" et" n" des entiers tels que m < n*
*"d" un exposant de v bits tel que $d = (d_{v-1} d_{v-2} .... d_0)_2$*
Sortie : $m^d \bmod n$
**Étape 1** *: $u = 1$ ; $t_0 = 0$ ; $t_1 = 0$ ; $t_2 = 0$ ; $s_0 = 1$ ; $s_1 = m$ ; $s_2 = 0$ ; $s_3 = 0$ ; $s_4 = 0$ ; $s_5 = 0$ ; $s_6 = 0$*
**Étape 2** : tant que $t_0 \leq v\text{-}1$ faire :

**(Étape 2A)** $j = d_{t0} * (v_1 + u + 1)$
**(Étape 2B)** $s_5 = (R_0 - R_1) / 2 \bmod n$
**(Étape 2C)** $s_6 = (R_0 + R_1) / 2 \bmod n$
**(Étape 2D)** $s_{M1(j, 0)} = s_{M1(j, 1)} \times s_{M1(j, 1)} \bmod n$ // $s_{M1(j, 2)} = s_{M1(j, 3)} \times s_{M1(j, 3)} \bmod n$ **(Étape 2E)** $s_{M1(j, 4)} = s_0 - s_2 \bmod n$
**(Étape 2F)** $s_{M1(j, 5)} = s_3$
**(Étape 2G)** $s_{M1(j, 6)} = s_4$
**(Étape 2H)** $t_1 = M1(j, 7)$
**(Étape 21)** $u = M1(j, 8)$
**(Étape 2J)** $k = 1 - (1 - d_{t0+1}) * t_1$
**(Étape 2K)** $s_{M2(k, 0)} = s_3$
**(Étape 2L)** $t_{M2(k, 1)} = 0$
**(Étape 2M)** $t_{M2(k, 2)} = t_{M2(k, 2)} + 1$
**(Étape 2N)** $t_0 = t_0 + u$

**Étape 3 :** Retourner résultat $s_0$

## Revendications

1. Procédé de calcul itératif protégé contre des attaques à canal caché, pour le calcul du résultat de l'exponentiation d'une donnée m par un exposant d, mis en oeuvre dans un dispositif électronique (DV1, DV2, DV3, DV4) et comprenant des multiplications de variables de grande taille exécutées au moyen d'au moins un bloc de calcul (MB1, MB2, SB1, SB2) du dispositif électronique,
**caractérisé en ce qu'**il ne comprend que des multiplications de variables de grande taille identiques, toute multiplication de variables de grande taille différentes x, y étant décomposée en une combinaison de multiplications de variables de grande taille identiques.

2. Procédé selon la revendication 1, dans lequel une multiplication de deux variables de grande taille différentes x, y est décomposée en une combinaison de multiplications de variables de grande taille identiques au moyen de l'une des formules suivantes ou d'une formule équivalente dérivée desdites formules :

$$x \times y = [(x+y) \times (x+y) - x \times x - y \times y]/2$$

$$x \times y = (x+y) \times (x+y)/2 - x \times x/2 - y \times y/2$$

$$x \times y = (x+y) \times (x+y)/2 - [x \times x + y \times y]/2$$

$$x \times y = [(x+y) \times (x+y) - x \times x]/2 - y \times y/2$$

$$x \times y = [(x+y) \times (x+y) - y \times y]/2 - x \times x/2$$

$$x \times y = [(x+y)/2] \times [(x+y)/2] - [(x-y)/2] \times [(x-y)/2]$$

$$x \times y = [(x+y) \times (x+y)]/4 - [(x-y) \times (x-y)]/4$$

$$x \times y = [(x+y) \times (x+y) - (x-y) \times (x-y)]/4$$

**3.** Procédé selon l'une des revendications 1 et 2, dans lequel toutes les multiplications de variables de grande taille identiques sont exécutées au moyen d'au moins un bloc (SB1, SB2) de calcul de la fonction d'élévation au carré.

**4.** Procédé selon l'une des revendications 1 à 3, ne comprenant aucune multiplication factice.

**5.** Procédé selon l'une des revendications 1 à 3, comprenant l'exécution simultanée de deux multiplications de variables de grande taille au moyen de deux blocs (MB1, MB2, SB1, SB2) de calcul de la fonction de multiplication ou de la fonction d'élévation au carré.

**6.** Procédé selon la revendication 5, comprenant l'exécution simultanée d'une multiplication factice d'une variable de grande taille et d'une multiplication non factice d'une variable de grande taille, de telle sorte qu'un bloc de calcul ne puisse pas être au repos tandis que l'autre est actif.

**7.** Dispositif (DV1, DV2, DV3, DV4) protégé contre des attaques à canal caché et configuré pour calculer le résultat de l'exponentiation d'une donnée m par un exposant d, comprenant au moins un bloc de calcul (MB1, MB2, SB1, SB2) pour exécuter des multiplications de variables de grande taille,
**caractérisé en ce qu'**il est configuré pour n'exécuter que des multiplications de variables de grande taille identiques en décomposant toute multiplication de variables de grande taille différentes x, y en une combinaison de multiplications de variables de grande taille identiques.

**8.** Dispositif selon la revendication 7, configuré pour décomposer une multiplication de deux variables de grande taille différentes x, y en une combinaison de multiplications de variables de grande taille identiques au moyen de l'une des formules suivantes ou d'une formule équivalente dérivée desdites formules :

$$x \times y = [(x+y) \times (x+y) - x \times x - y \times y]/2$$

$$x \times y = (x+y) \times (x+y)/2 - x \times x/2 - y \times y/2$$

$$x \times y = (x+y) \times (x+y)/2 - [x \times x + y \times y]/2$$

$$x \times y = [(x+y) \times (x+y) - x \times x]/2 - y \times y/2$$

$$x \times y = [(x+y) \times (x+y) - y \times y]/2 - x \times x/2$$

$$x \times y = [(x+y)/2] \times [(x+y)/2] - [(x-y)/2] \times [(x-y)/2]$$

$$x \times y = [(x+y) \times (x+y)]/4 - [(x-y) \times (x-y)]/4$$

$$x \times y = [(x+y) \times (x+y) - (x-y) \times (x-y)]/4$$

9. Dispositif électronique selon l'une des revendications 7 et 8, configuré pour exécuter toutes les multiplications de variables de grande taille identiques au moyen d'au moins un bloc (SB1, SB2) de calcul de la fonction d'élévation au carré.

10. Dispositif électronique selon l'une des revendications 7 à 9, configuré pour n'exécuter aucune multiplication factice.

11. Dispositif électronique selon l'une des revendications 7 à 9, comprenant deux blocs (MB1, MB2, SB1, SB2) de calcul de la fonction de multiplication ou de la fonction d'élévation au carré, et configuré pour l'exécution simultanée de deux multiplications de variables de grande taille au moyen des deux blocs de calcul.

12. Dispositif électronique selon la revendication 11, configuré pour exécuter simultanément une multiplication factice d'une variable de grande taille et une multiplication non factice d'une variable de grande taille, de telle sorte qu'un bloc de calcul ne puisse pas être au repos tandis que l'autre est actif.

13. Circuit intégré sur microplaquette de semi-conducteur, comprenant un circuit électronique selon l'une des revendications 7 à 12.

14. Objet portatif (CD), comprenant un circuit électronique selon l'une des revendications 7 à 12.

**Patentansprüche**

1. Gegen Seitenkanalangriffe geschütztes Verfahren zum iterativen Berechnen des Ergebnisses des Potenzierens eines gegebenen Wertes m mit einem Exponenten d, welches in einer elektronischen Vorrichtung (DV1, DV2, DV3, DV4) eingesetzt wird und Multiplikationen von großen Variablen mittels wenigstens eines Berechnungsblocks (MB1, MB2, SB1, SB2) der elektronischen Vorrichtung umfasst, **dadurch gekennzeichnet, dass** es nur Multiplikationen von identischen großen Variablen umfasst, wobei jede Multiplikation von unterschiedlichen großen Variablen x, y in eine Kombination von Multiplikationen von identischen großen Variablen zerlegt wird.

2. Verfahren nach Anspruch 1, bei dem eine Multiplikation von zwei unterschiedlichen großen Variablen x, y in eine Kombination von Multiplikationen von identischen großen Variablen mittels einer der folgenden Formeln oder einer äquivalenten, von diesen Formeln abgeleiteten Formel zerlegt wird:

$$x \times y = [(x+y) \times (x+y) - x \times x - y \times y]/2$$

$$x \times y = (x+y) \times (x+y)/2 - x \times x/2 - y \times y/2$$

$$x \times y = (x+y) \times (x+y)/2 - [x \times x + y \times y]/2$$

$$x \times y = [(x+y) \times (x+y) - x \times x]/2 - y \times y/2$$

$$x \times y = [(x+y) \times (x+y) - y \times y]/2 - x \times x/2$$

$$x \times y = [(x+y)/2] \times [(x+y)/2] - [(x-y)/2] \times [(x-y)/2]$$

$$x \times y = [(x+y) \times (x+y)]/4 - [(x-y) \times (x-y)]/4$$

$$x \times y = [(x+y) \times (x+y) - (x-y) \times (x-y)]/4$$

3. Verfahren nach einem der Ansprüche 1 und 2, bei dem alle Multiplikationen von identischen großen Variablen mittels wenigstens eines Blocks (SB1, SB2) zur Berechnung der Quadrierfunktion durchgeführt werden.

4. Verfahren nach einem der Ansprüche 1 bis 3, welches keine Dummy-Multiplikation umfasst.

5. Verfahren nach einem der Ansprüche 1 bis 3, welches die simultane Durchführung von zwei Multiplikationen von großen Variablen mittels zwei Blöcke (MB1, MB2, SB1, SB2) zur Berechnung der Multiplikationsfunktion oder der Quadrierfunktion umfasst.

6. Verfahren nach Anspruch 5, welches die simultane Durchführung einer Dummy-Multiplikation einer großen Variablen und einer Nicht-Dummy-Multiplikation einer großen Variablen umfasst, so dass der eine Berechnungsblock nicht im Ruhezustand sein kann, während der andere aktiv ist.

7. Gegen Seitenkanalangriffe geschützte Vorrichtung (DV1, DV2, DV3, DV4), die konfiguriert ist, um das Ergebnis des Potenzierens eines gegebenen Wertes m mit einem Exponenten *d* zu berechnen, und die wenigstens einen Berechnungsblock (MB1, MB2, SB1, SB2) umfasst, um Multiplikationen von großen Variablen durchzuführen, **dadurch gekennzeichnet, dass** sie konfiguriert ist, um nur Multiplikationen von identischen großen Variablen durchzuführen, wobei jede Multiplikation von unterschiedlichen großen Variablen x, y in eine Kombination von Multiplikationen von identischen großen Variablen zerlegt wird.

8. Vorrichtung nach Anspruch 7, die konfiguriert ist, um eine Multiplikation von zwei unterschiedlichen großen Variablen x, y in eine Kombination von Multiplikationen von identischen großen Variablen mittels einer der folgenden Formeln oder einer äquivalenten, von diesen Formeln abgeleiteten Formel zu zerlegen:

$$x \times y = [(x+y) \times (x+y) - x \times x - y \times y]/2$$

$$x \times y = (x+y) \times (x+y)/2 - x \times x/2 - y \times y/2$$

$$x \times y = (x+y) \times (x+y)/2 - [x \times x + y \times y]/2$$

$$x \times y = [(x+y) \times (x+y) - x \times x]/2 - y \times y/2$$

$$x \times y = [(x+y) \times (x+y) - y \times y]/2 - x \times x/2$$

$$x \times y = [(x+y)/2] \times [(x+y)/2] - [(x-y)/2] \times [(x-y)/2]$$

$$x×y = [(x+y)×(x+y)]/4 - [(x-y)×(x-y)]/4$$

$$x×y = [(x+y)×(x+y) - (x-y)×(x-y)]/4$$

9. Elektronische Vorrichtung nach einem der Ansprüche 7 und 8, die konfiguriert ist, um alle Multiplikationen von identischen großen Variablen mittels wenigstens eines Blocks (SB1, SB2) zur Berechnung der Quadrierfunktion durchzuführen.

10. Elektronische Vorrichtung nach einem der Ansprüche 7 bis 9, die konfiguriert ist, um keine Dummy-Multiplikation durchzuführen.

11. Elektronische Vorrichtung nach einem der Ansprüche 7 bis 9, die zwei Blöcke (MB1, MB2, SB1, SB2) zur Berechnung der Multiplikationsfunktion oder der Quadrierfunktion umfasst, und die für die simultane Durchführung von zwei Multiplikationen von großen Variablen mittels der zwei Berechnungsblöcke konfiguriert ist.

12. Elektronische Vorrichtung nach Anspruch 11, die für die simultane Durchführung einer Dummy-Multiplikation einer großen Variablen und einer Nicht-Dummy-Multiplikation einer großen Variablen konfiguriert ist, so dass der eine Berechnungsblock nicht im Ruhezustand sein kann, während der andere aktiv ist.

13. Integrierte Schaltung auf einem Halbleiterchip, umfassend eine elektronische Schaltung nach einem der Ansprüche 7 bis 12.

14. Tragbares Objekt (CD), umfassend eine elektronische Schaltung nach einem der Ansprüche 7 bis 12.

## Claims

1. Iterative calculation method protected against hidden channel attacks, for the calculation of the result of the exponentiation of a data m by an exponent d, implemented in an electronic device (DV1, DV2, DV3, DV4) and comprising multiplications of big size variables executed by means of at least one calculation block (MB1, MB2, SB1, SB2) of the electronic device,
comprising only multiplications of identical big size variables, any multiplication of different big size variables x, y being broken down into a combination of multiplications of identical big size variables.

2. Method according to claim 1, wherein a multiplication of two different big size variables x, y is broken down into a combination of multiplications of identical big size variables by means of one of the following formulas or an equivalent formula derived from said formulas:

$$x×y = [(x+y)×(x+y) − x×x − y×y]/2$$

$$x×y = (x+y)×(x+y)/2 - x×x/2 - y×y/2$$

$$x×y = (x+y)×(x+y)/2 - [x×x + y×y]/2$$

$$x×y = [(x+y)×(x+y) - x×x]/2 - y×y/2$$

$$x×y = [(x+y)×(x+y) - y×y]/2 - x×x/2$$

$$x \times y = [(x+y)/2] \times [(x+y)/2] - [(x-y)/2] \times [(x-y)/2]$$

$$x \times y = [(x+y) \times (x+y)]/4 - [(x-y) \times (x-y)]/4$$

$$x \times y = [(x+y) \times (x+y) - (x-y) \times (x-y)]/4$$

3. Method according to one of claims 1 and 2, wherein all the multiplications of identical big size variables are executed by means of at least one calculation block (SB1, SB2) for calculating the square function.

4. Method according to one of claims 1 to 3, not comprising any dummy multiplication.

5. Method according to one of claims 1 to 3, comprising simultaneously executing two multiplications of big size variables by means of two calculation blocks (MB1, MB2, SB1, SB2) for calculating the multiplication function or the square function.

6. Method according to claim 5, comprising simultaneously executing a dummy multiplication of a big size variable and a non dummy multiplication of a big size variable, so that a calculation block cannot be idle while the other is active.

7. Device (DV1, DV2, DV3, DV4) protected against hidden channel attacks and configured to calculate the result of the exponentiation of a data m by an exponent d, comprising at least one calculation block (MB1, MB2, SB1, SB2) for executing multiplications of big size variables,
configured to execute only multiplications of identical big size variables, by breaking down any multiplication of different big size variables x, y into a combination of multiplications of identical big size variables.

8. Device according to claim 7, configured to break down a multiplication of two different big size variables x, y into a combination of multiplications of identical big size variables by means of one of the following formulas or an equivalent formula derived from said formulas:

$$x \times y = [(x+y) \times (x+y) - x \times x - y \times y]/2$$

$$x \times y = (x+y) \times (x+y)/2 - x \times x/2 - y \times y/2$$

$$x \times y = (x+y) \times (x+y)/2 - [x \times x + y \times y]/2$$

$$x \times y = [(x+y) \times (x+y) - x \times x]/2 - y \times y/2$$

$$x \times y = [(x+y) \times (x+y) - y \times y]/2 - x \times x/2$$

$$x \times y = [(x+y)/2] \times [(x+y)/2] - [(x-y)/2] \times [(x-y)/2]$$

$$x \times y = [(x+y) \times (x+y)]/4 - [(x-y) \times (x-y)]/4$$

$$x \times y = [(x+y) \times (x+y) - (x-y) \times (x-y)]/4$$

9. Electronic device according to one of claims 7 and 8, configured to execute all the multiplications of identical big size variables by means of at least one calculation block (SB1, SB2) for calculating the square function.

10. Electronic device according to one of claims 7 to 9, configured to execute no dummy multiplication.

11. Electronic device according to one of claims 7 to 9, comprising two calculation blocks (MB1, MB2, SB1, SB2) for calculating the multiplication function or the square function, and configured to simultaneously execute two multiplications of big size variables by means of the two calculation blocks.

12. Electronic device according to claim 11, configured to simultaneously execute a dummy multiplication of a big size variable and a non dummy multiplication of a big size variable, so that a calculation block cannot be idle while the other is active.

13. Integrated circuit on semi-conductor chip, comprising an integrated circuit according to one of claims 7 to 12.

14. Portable object (CD), comprising an integrated circuit according to one of claims 7 to 12.

1　　0　　0　　1　　　1　　0　　0

2A　2B　2A　2A　2A　2B　2A　2B　2A　2A

**Fig. 1**
**(Art Antérieur)**

2A　2B　2A　2B　2A　2B　2A　2B　2A　2B

**Fig. 2**
**(Art Antérieur)**

**Fig. 3**
**(Art Antérieur)**

**Fig. 4**

**Fig. 5A**

**Fig. 5B**

**Fig. 6A**

**Fig. 6B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03083645 A

- US 7742595 B

**Littérature non-brevet citée dans la description**

- Low-Cost Solutions for Preventing Simple Side-Channel Analysis: Side-Channel Atomicity. *IEEE Transactions on Computers,* Juin 2004, vol. 53 (6), 760-768

- Distinguishing Multiplications from Squaring Operations. **F. AMIEL ; B. FEIX ; M. TUNSTALL ; C. WHELAN ; W. MARNANE.** Selected Areas in Cryptography, volume 5381 of Lecture Notes in Computer Science. Springer, 2008, vol. 5381, 346-360